# EUROPEAN PATENT SPECIFICATION

(11) **EP 2 037 784 B1**
(45) Date of publication and mention of the grant of the patent: **27.08.2014**
(21) Application number: 07719225.0
(22) Date of filing: 25.06.2007
(51) Int. Cl.: A47J 39/00

(54) **A DEVICE AND METHOD FOR HEATING MULTIPLE PREPARED MEALS**
VORRICHTUNG UND VERHFAHREN ZUM ERHITZEN VON MEHREREN ZUBEREITETEN MAHLZEITEN
DISPOSITIF ET PROCÉDÉ DE CHAUFFE DE PLATS PRÉPARÉS MULTIPLES

(30) Priority: 26.06.2006 BE 200600350
(43) Date of publication of application: 25.03.2009
(73) Proprietor: Halm Bvba, 2590 Berlaar (BE)
(72) Inventor: VERHELST, Marleen, 2590 Berlaar (BE); GROFFILS, Carlo, 3001 Heverlee (BE)
(74) Representative: Bird, William Edward
(86) International application number: PCT/BE2007/000067
(87) International publication number: WO 2008/000048

(56) References cited:
- FR-A- 2 474 852
- FR-A1- 2 680 459
- GB-A- 1 273 217
- GB-A- 2 293 004
- US-A- 3 129 041

## Description

### Field of the invention

The invention concerns a device and a method for heating multiple prepared meals simultaneously. More particularly, the invention deals with a heating unit and a method for heating multiple meals simultaneously by at least one microwave generator.

Moreover, the invention describes a transport unit for prepared meals and it enables a coupling to a heating unit with a least one microwave generator.

The invention also concerns a method and a device for selectively heating meals by at least one microwave generator and consisting of a particular partition between warm and cold cavities.

### Background of the invention

During the distribution of meals in factories, schools, rest houses, and more specifically in the field where every consumer need to be served simultaneously on a fixed time schedule, problems arise with the time pressure due to a huge number of meals that has to be heated and served.

Moreover, legislation concerning food safety matters like its temperature has to be taken in account.

A meal, composed of hot and cold ingredients, complicates the heating procedure. During the heating of the hot zone, no heat transmission can take place to the cold zone. Microwaves.may not propagate into the cold area.

Currently, the following techniques are used in order to compose the meals.
Firstly, the different ingredients of a hot meal will be selected warm, kept on temperature and distributed to the consumer.
Alternatively, the meal will be composed before serving, kept cold until they will be distributed to the consumers.

The use of hot air in order to heat meals is known in the prior art. The whole space that encloses the meal will be heated which increases the energy expenditure.

Another technique that is known in the state of the art uses conduction heating, which also increases the consumption of energy.
Thirdly, induction heating consumes less energy than the preceding techniques, but special conditions of the dishes are needed.

The foregoing techniques demand a long heating time resulting in a considerable energy expenditure and consequently decrease tremendously the flexibility in emergency or unexpected situations.

Some solutions have already been proposed.

FR2680459 concerns a transport device for distributing meals provided with a microwave furnace. It provides one or two cavities for heating an individual meal by inserting it in such a cavity. The cavity is provided with a metal screen separating a warm and a cold zone. The aim of this invention is obviously not to heat multiple meals simultaneously by a microwave source.

In FR2474852 a distribution device for meals is described. Multiple meals can be stored and heated in an isolated space, provided with a separation panel in order to create a warm and a cold zone. The heating processes described herein concern pulsed hot air, conduction with a resistance and an induction coil for each tray. No microwave heating is suggested.

GB2293004 deals with a food dispensing cabinet provided with removable barriers to isolate a first and a second region of a tray. In this document a powered heater to generate a flow of air, individual radiant heaters, a powered microwave heater or an unpowered heat source are proposed. Here again in this document no particular solution has been suggested for microwave heating due to the significance of the partition between the warm and cold zone.

US3291546 concerns a transport device for delivering hot and cold food. A partition of plastic or stainless steel is proposed between a hot and a cold zone. Electrical heating elements may be provided in the sidewall. No microwave heating is described and consequently no particularity concerning the partition in relation with the preceding is taught.

Resuming the foregoing documents, they mainly targeted distributing devices for meals with heating means like hot air pulse, induction coils or radiant heaters with a hot and a cold zone, separated by a partition panel. When using a microwave source, just the heating of a single meal is targeted or no significant specification is given for the heating of multiple meals. These documents neither specify the particular characteristics of the partition wall between the hot and cold area due to propagating microwaves.

The aim of this invention is to specify the use of at least one microwave source for the heating of multiple prepared meals, provided with a partition between warm and cold cavities and to overcome the disadvantages of the foregoing documents.

### Summary of the invention

The device consists of a heating unit with at least one cavity, provided with at least one microwave generator for the heating of prepared meals that could be inserted manually or with the aid of a transport unit. Mainly, manually means the insertion of the meals on a tray. The heating unit as well as the transport unit can both be provided with a partition panel between a warm and cold zone on the tray. The partition panel consists of two particular profiles, which enable to insert the tray in between.
The transport unit will be coupled to the heating unit. In one embodiment, multiple microwave generators are positioned in such a way that they are at the level of a meal. In the latter case, sensors in order to detect the presence of a meal can be implemented in order to activate selectively one or more microwave generators. Preferable, just one microwave generator will be used. The device enables to heat multiple prepared meals simultaneously. A programming unit enables to set heating time, intensity, temperature, ...etc for several portions. The programming unit can be built in the heating unit by using a keypad and/or a touch screen or can be activated by a wireless communication device. Temperature sensors can be fitted in the cavities in order to monitoring temperature.

A first advantage of this invention is that prepared meals can be composed just in time before serving time due to a very short heating time with microwaves. The meals can be composed and based on the preferences and the needs of the consumer. It enables the use of prepacked ingredients.

The use of at least one microwave generator enables to heat multiple prepared meals simultaneously. It promotes the speed and the quality of the service enormously. Moreover, this energy source demands a much lower energy expenditure. The heating time will be reduced significantly compared with the state of the art, which shows a second advantage.

The particularity of the partition panels, dividing a warm and a cold cavity, prevents the transmission of heat between these compartments. This creates a third advantage.

The use of microwave energy keeps the food quality value of the ingredients at high level, which gives a fourth advantage.

A next advantage will be obtained by the uniform distribution of the microwaves within the cavity, leading to an equally heating of the meals.

Moreover, the device and the method enable to pasteurise the different ingredients, creating a next advantage.

Finally, due to this invention, dishes are made of non-conductive materials like plastics so that no expensive dishes like porcelain are needed.

The invention will be explained with the accompanied drawings.

### Brief description of the drawings

Figure 1a : front view of the heating unit.
Figure 1b : top view of the heating unit.
Figure 2a : front view of the transport unit.
Figure 2b : top view of the transport unit.
Figure 3 : front view of the partition panel.

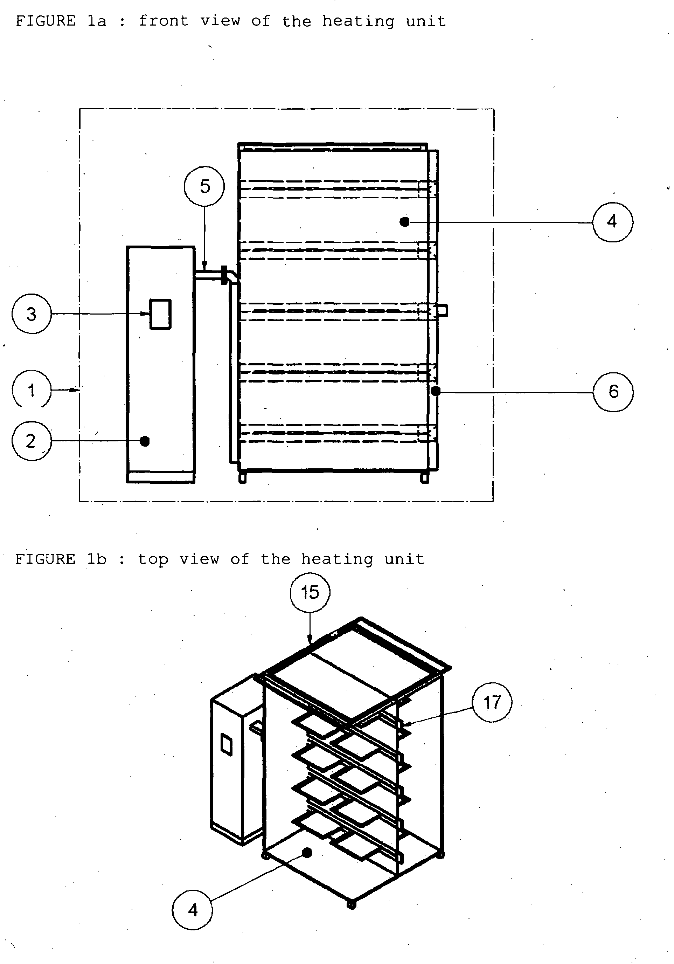

The invention consist, according to figures 1a and 1b, of a heating unit(1), comprising a housing(2), provided with a programming unit, not shown on the figure, and a key pad(3). At least one compartment within at least one cavity(4), next to the central part, enables the insertion of serving trays. Cavity(4) is provided with at least one microwave generator(5). Alternatively, a remote control enables to control the device at distance. A wireless communication tool enables to control and to monitor the heating process. The known state of the art communication means like wireless networks, radio frequency, infrared, ultrasonic, Bluetooth...etc, but not limited to this list, could be implemented.

### Description of the preferred embodiments of the invention

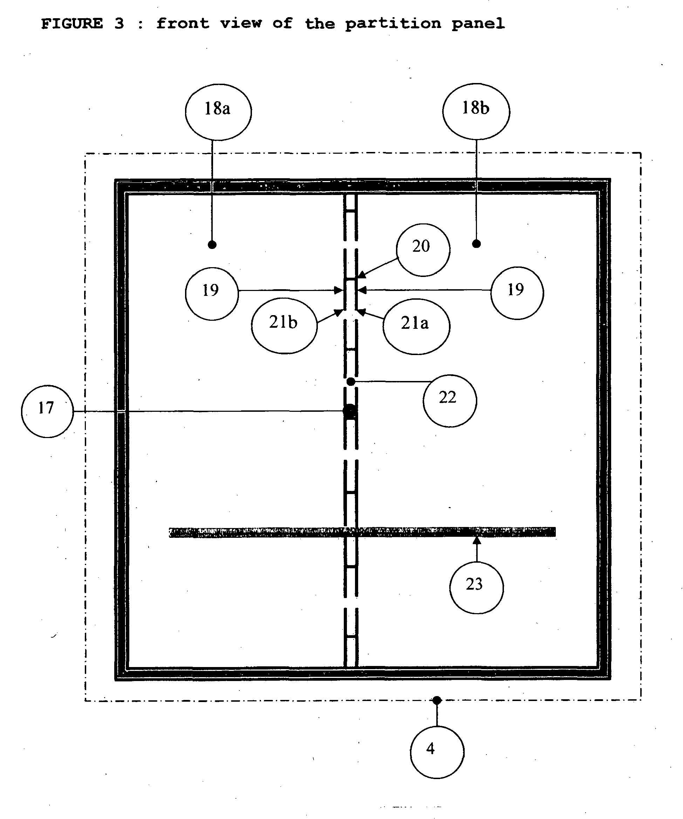

According to figure 3, a partition panel(17) between a hot and a cold zone on the serving trays(23) with the meals is described. A cavity(4), surrounded by a mantle, is divided in two zones i.e. a hot zone(18a) and a cold zone(18b). These two zones(18a,b) are separated by a partition panel(17). This partition panel(17) consists of two parallel electrical conductive sheets(19). Both sheets(19) are connected to the back wall of the unit.
Two parallel sheets(19) are connected by a bridge piece(20) at a distance from the extremities. Due to this construction, a U-shaped profile with two legs(21a,b) is formed at the extremity of the panel(17). Two open U-shaped profiles are positioned vertically opposite to each other in order to create a slot(22), enabling to insert a non-conductive serving tray(23). Due to this construction a propagating wave is attenuated and a cutoff area is, created.
This particular structure prevents a heat transmission across the slot(22) from a hot cavity(18a) to a cold cavity(18b). Preferable, the partition panel(17) could be made of stainless steel, but other materials with similar characteristics could be used as well.
The serving trays(23) are made of a non-conductive material, like synthetics. A possible material could be polyester, reinforced with glass fibres. The mantle of the cavity(4) is also made of an electrically conductive material. The main goal of the mantle is to keep microwaves inside the unit.

A possible embodiment is provided with a cooling cell situated at the level of the meal. Preferably, a cryogen could be used to cool the cold zone of the meal. Obviously, other cooling or chilling techniques, fixed or portable could be used.
The cooling cell can also be situated at the level of the hot zone in order to keep the meal fresh until the moment of the microwave heating process.

In another embodiment, multiple microwave generators(5) are provided at the level of the meals on the serving trays. Depending of the height of the cavity(4) and consequently of the number of serving trays, an equally number of microwave generators(5) as many as vertically stacked serving trays could be provided.

A control panel(3) enables to regulate the microwave generators(5) and to set parameters like intensity, heating time. The heating process can be programmed in order to start an automatic heating cycle.
Cavity(4) comprises a door(6) that can be closed during the heating cycle. Preferably, a hinged door could be provided, but also gliding doors or doors of the roller blind type are not excluded.

In another embodiment, a sensor is provided at the level of the meal in cavity(4) in order to detect the presence of a meal. When no meal is detected, the microwave generator(5) in this compartment will not be activated.

Another embodiment provides more than one column of cavities(4). Two columns of cavities(4) are situated laterally of the central housing(2). Extensions are possible according to the number of consumers.

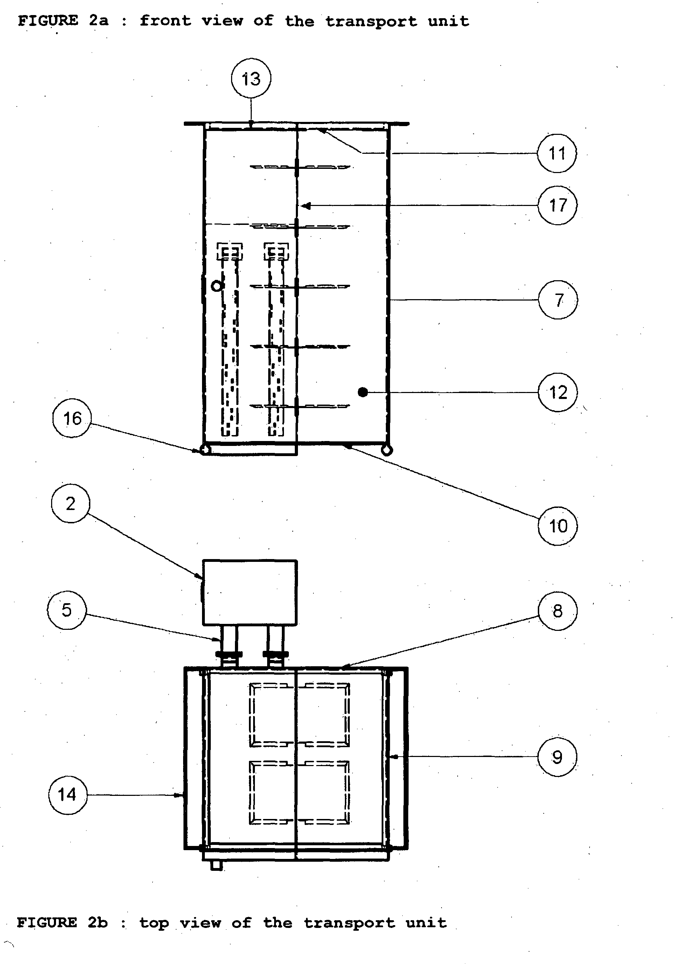

According to figures 2a and 2b, another embodiment describes a transporting unit(7). Here again, the unit(7) enables the insertion of multiple meals. The unit(7) consists of a mantle with a back wall(8), two side walls(9), a bottom wall(10) and a ceiling(11). The open front side(12) enables to insert the serving trays with the meals. Preferable, about 10 serving trays could be inserted. The transporting unit(7) is about 1,30 m of height. Depending of the application, measures could be adapted to consumer needs. Regarding the height of the unit(7), ergonomic aspects need to be taken in consideration. Moreover, in order to couple the transporting unit(7) to a heating unit(1), the height need to adapted in relation to the foregoing.
The transporting unit(7) is also provided with a partition panel(17), dividing a hot and a cold compartment illustrated in figure 2. Preferable, the mantle of the transporting unit(7) needs to be insulated in order to prevent temperature losses.

The transporting unit(7) is provided with a handgrip(14) and an upstanding border(15), shown on figure 1b, on the top panel(13). A number of wheels(16), preferable of the castor type enabling a 360 degrees swivelling and turning, are provided.

Another embodiment describes a transporting unit(7) comprises a coupling mechanism in order to grip another unit(7). A hook mechanism, gripping in a groove, situated in a push border below or the handgrip of an adjacent transporting unit(7) could be provided. This enables to transport multiple units(7) simultaneously.

The transporting unit(7) can be provided with a cooling cell in the cold zone due to another embodiment. This cooling cell can be build-in or can inserted as a portable device. Like already mentioned before, a cryogen could be used as a cooling source, but other techniques are not excluded. At least one cooling cell can be provided at the level of the cold as well as the hot compartment in order to keep the meals fresh until heating.

In another embodiment, the transporting unit(7) is provided with an outlet at the bottom(10) in order to drain cleaning water.

The transporting unit(7) with serving trays, provided with meals, can be coupled with the open front side(12) of the heating unit(1). Hot and cold meals will be separated by a partition panel, and at least one microwave generator(5) will heat the hot zone. The microwaves will be equally transmitted in the hot cavity of the transporting unit(7). When more than one microwave generator(5) is provided, each generator will be situated at the level of the meals in the transporting unit(7). All the meals can be integrally heated in the transporting unit(7) by coupling to the heating unit(1). Again, the particular structure of the partition panel, illustrate in figure 3 and already described before, disables propagating microwaves to penetrate into the cold area.

In another embodiment, more transporting units(7) can be coupled to the heating unit(1).

The transporting unit(7) can also be coupled in the cavity(4) of a heating unit(1), due to another embodiment.

The invention also concerns a method to heat multiple meals simultaneously with at least one microwave generator and creating a separation between a hot and a cold zone of the meals in order to prevent heat transmission to the cold zone.

The method consists in a first step of the insertion of the serving trays in a device, which is provided with a separation between a hot and a cold zone of a meal. Next, a heating process will be started. According to the consumer needs, parameters will be controlled with the aid of a programming unit. A remote control or a wireless communication unit can be used. Finally, the meals will be served to the consumers.

The use of microwave heating in order to warm-up multiple meals simultaneously and selectively with a hot and a cold zone so that no heat transmission can take place to the cold zone due to a structured partition panel, makes the invention new and inventive.

## Claims

1. A device for heating multiple prepared meals simultaneously consisting of a heating unit(1) with a control unit and a panel(3), at least one cavity(4) provided with at least one microwave generator(5) and a partition panel(17) in order to prevent heat transmission between a hot(18a) and cold(18b) zone of meals **and characterised in that** the partition panel(17), fastened to the back wall of the cavity(4) consists of two electrical conductive parallel sheets(19), connected by a bridge piece(20) at a distance from its extremities, creating a U-shaped profile with two legs(21a,b) and wherein at least two U-shaped extremities are vertically positioned with the open legs(21a,b) opposite to each other in order to create a slot(22), enabling to insert a non-conductive serving tray(23).

2. A device for heating multiple prepared meals simultaneously according to claim 1 **and characterised in that** at least one microwave generator(5) is positioned in the cavity(4) at the side of the hot zone(18a).

3. A device for heating multiple prepared meals simultaneously according to claim 2 **and characterised in that** multiple microwave generators(5) are positioned in the hot zone(18a) at the level of the meals.

4. A device for heating multiple prepared meals simultaneously according to the preceding claims **and characterised in that** multiple cavities(4) are provided, each with at least one microwave generator(5).

5. A device for heating multiple prepared meals simultaneously according to the preceding claims **and characterised in that** a control panel(3) enables to set or to program the parameters of at least one microwave generator(5).

6. A device for heating multiple prepared meals simultaneously according to claims 1-5 **and characterised in that** a sensor to detect the presence of a meal is provided at the level of a meal in the cavity(4).

7. A device for heating multiple prepared meals simultaneously according to claims 1-6 **and characterised in that** a build-in or portable cooling cell is provided in the cool zone(18b) of the cavity(4).

8. A device for heating multiple prepared meals simultaneously according to claim 7 **and characterised in that** a cryogen is used for the cooling process.

9. A device for heating multiple prepared meals simultaneously according to the preceding claims **and characterised in that** a transporting unit(7), provided with wheels(16) and a mantle, consisting of an open front side(12) in order to insert serving trays(23) and can be coupled to a heating unit(1).

10. A device for heating multiple prepared meals r simultaneously consisting of a transporting unit(7) with a partition panel(17) with the goal to couple the transporting unit(7) to a heating unit(1), provided with at least one microwave generator(5) **and characterised in that** the partition panel(17), fastened to the back wall of the transporting unit(5) consists of two electrical conductive parallel sheets(19), connected by a bridge piece(20) at a distance from its extremities, creating a U-shaped profile with two legs(21a,b) and wherein at least two U-shaped extremities are vertically positioned with the open legs(21a,b) opposite to each other in order to create a slot(22), enabling to insert a non-conductive serving tray(23).

11. A device for multiple prepared meals simultaneously according to claim 10 **and characterised in that** the transporting unit(7) is coupled in the cavity(4) of a heating unit(1).

12. A device for heating multiple prepared meals simultaneously according to claims 10-11 **and characterised in that** the transporting unit(7) is provided with a coupling mechanism in order to connect multiple transporting units(7).

13. A device for heating multiple prepared meals simultaneously according to claims 10-12 **and characterised in that** a build-in or portable cooling cell is provided in the cool zone(18b) of the cavity(4).

14. A device for heating multiple prepared meals simultaneously according to claim 13 **and characterised in that** a cryogen is used for the cooling process.

15. A device for heating multiple prepared meals simultaneously according to claims 10-11 **and characterised in that** multiple microwave generators(5) are positioned in the hot zone(18a) at the level of the meals.

16. A method for heating multiple prepared meals simultaneously in a cavity(4) by inserting the meals and selectively heating a hot zone(18a) by at least one microwave generator(5) due to a partition panel(17), fastened to the back wall of the transporting unit(5) consists of two electrical conductive parallel sheets(19), connected by a bridge piece(20) at a distance from its extremities, creating a U-shaped profile with two legs(21a,b) and wherein at least two U-shaped extremities are vertically positioned with the open legs(21a,b) opposite to each other in order to create a slot(22), enabling to insert a non-conductive serving tray(23) and according to the consumer needs, parameters will be controlled with the aid of a programming unit.

## Patentansprüche

1. Eine Vorrichtung für das gleichzeitige Erwärmen mehrerer Fertiggerichte, bestehend aus einer Heizeinheit(1) mit einer Steuereinheit und einer Platte(3), mindestens einer Kammer(4), die mit mindestens einem Mikrowellengenerator(5) und einer Trennwand(17) ausgestattet ist, um eine Wärmeübertragung zwischen einer Wärmezone (18a) und einer Kühlzone (18b) zu verhindern, **und dadurch gekennzeichnet, dass** die Trennwand(17), die an der Rückwand der Kammer(4) befestigt ist, aus zwei elektrisch leitenden parallelen Platten(19) besteht, die über ein Brückenstück(20) mit einem Abstand zwischen beiden Enden verbunden sind, das ein U-förmiges Profil mit zwei Schenkeln(21a,b) bildet, wobei mindestens zwei U-förmige Enden senkrecht so positioniert sind, dass die offenen Schenkel(21a,b) sich gegenüber liegen und eine Aussparung(22) bilden, in die ein nicht leitendes Serviertablett(23) eingeführt werden kann.

2. Eine Vorrichtung zum gleichzeitigen Erwärmen mehrerer Fertiggerichte gemäß Anspruch 1 **und dadurch gekennzeichnet, dass** sich mindestens ein Mikrowellengenerator(5) in der Kammer(4) an der Seite der Wärmezone(18a) befindet.

3. Eine Vorrichtung zum gleichzeitigen Erwärmen mehrerer Fertiggerichte gemäß Anspruch 2 **und dadurch gekennzeichnet, dass** sich mehrere Mikrowellengeneratoren(5) in der Wärmezone(18a) auf Höhe der Fertiggerichte befinden.

4. Eine Vorrichtung für das gleichzeitige Erwärmen mehrerer Fertiggerichte gemäß den vorherigen Ansprüchen **und dadurch gekennzeichnet, dass** mehrere Kammern(4) vorhanden sind, die alle mit mindestens einem Mikrowellengenerator(5)ausgestattet sind.

5. Eine Vorrichtung für das gleichzeitige Erwärmen mehrerer Fertiggerichte gemäß den vorherigen Ansprüchen **und dadurch gekennzeichnet, dass** über eine Steuereinheit(3) die Parameter von mindestens einem Mikrowellengenerator(5) eingestellt oder programmiert werden können.

6. Eine Vorrichtung für das gleichzeitige Erwärmen mehrerer Fertiggerichte gemäß den Ansprüchen 1-5 **und dadurch gekennzeichnet, dass** ein Sensor, der das Vorhandensein eines Fertiggerichts erkennt, auf Höhe des Fertiggerichts in der Kammer(4) vorhanden ist.

7. Eine Vorrichtung für das gleichzeitige Erwärmen mehrerer Fertiggerichte gemäß den Ansprüchen 1-6 **und dadurch gekennzeichnet, dass** eine eingebaute oder tragbare Kühlzelle in der Kühlzone(18b) der Kammer(4) vorhanden ist.

8. Eine Vorrichtung für das gleichzeitige Erwärmen mehrerer Fertiggerichte gemäß Anspruch 7 **und dadurch gekennzeichnet, dass** ein Kühlmittel für den Kühlvorgang verwendet wird.

9. Eine Vorrichtung für das gleichzeitige Erwärmen von mehreren Fertiggerichten gemäß den vorherigen Ansprüchen **und dadurch gekennzeichnet, dass** eine Transporteinheit(7), die mit Rädern(16) und einer Ummantelung ausgestattet ist und eine offene Vorderseite(12) besitzt, um Serviertabletts(23)einzuführen, vorhanden ist und mit einer Aufwärmeinheit(1) gekoppelt werden kann.

10. Eine Vorrichtung für das gleichzeitige Erwärmen mehrerer Fertiggerichte, bestehend aus einer Transporteinheit(7) mit einer Trennwand(17) mit dem Ziel, die Transporteinheit(7) mit einer Heizeinheit(1), die mit mindestens einem Mikrowellengenerator(5) ausgestattet ist, zu koppeln, **und dadurch gekennzeichnet, dass** die Trennwand(17), die an der Rückwand der Transporteinheit(5) befestigt ist, aus zwei elektrisch leitenden parallelen Platten(19) besteht, die über ein Brückenstück(20) mit einem Abstand zwischen beiden Enden verbunden sind, das ein U-förmiges Profil mit zwei Schenkeln(21a,b) bildet, wobei mindestens zwei U-förmige Enden senkrecht so positioniert sind, dass die offenen Schenkel(21a,b) sich gegenüber liegen und eine Aussparung(22) bilden, in die ein nicht-leitendes Serviertablett(23) eingeführt werden kann.

11. Eine Vorrichtung für das gleichzeitige Erwärmen mehrerer Fertiggerichte gemäß Anspruch 10 **und dadurch gekennzeichnet, dass** die Transporteinheit(7) in der Kammer(4) mit einer Heizeinheit(1) gekoppelt ist.

12. Eine Vorrichtung für das gleichzeitige Erwärmen mehrerer Fertiggerichte gemäß den Ansprüchen 10-11 **und dadurch gekennzeichnet, dass** die Transporteinheit(7) einen Kopplungsmechanismus besitzt, um mehrere Transporteinheiten(7) zu verbinden.

13. Eine Vorrichtung für das gleichzeitige Erwärmen mehrerer Fertiggerichte gemäß den Ansprüchen 10-12 **und dadurch gekennzeichnet, dass** eine eingebaute oder tragbare Kühlzelle in der Kühlzone(18b) der Kammer(4) vorhanden ist.

14. Eine Vorrichtung für das gleichzeitige Erwärmen mehrerer Fertiggerichte gemäß Anspruch 13 **und dadurch gekennzeichnet, dass** ein Kühlmittel für den Kühlvorgang verwendet wird.

15. Eine Vorrichtung zum Erwärmen mehrerer Fertiggerichte gleichzeitig gemäß den Ansprüchen 10-11 **und dadurch gekennzeichnet, dass** sich mehrere Mikrowellengeneratoren(5) in der Wärmezone(18a) auf Höhe der Gerichte befinden.

16. Eine Methode für das gleichzeitige Erwärmen mehrerer Fertiggerichte in einer Kammer(4) durch das Einführen der Fertiggerichte und selektive Erwärmen einer Wärmezone(5) mit mindestens einem Mikrowellengenerator(5) durch eine Trennwand(17), die an der Rückwand der Transporteinheit(5) befestigt ist und aus zwei elektrisch leitenden parallelen Platten(19) besteht, die über ein Brückenstück(20) mit einem Abstand zwischen beiden Enden verbunden sind, das ein U-förmiges Profil mit zwei Schenkeln(21a,b) bildet, wobei mindestens zwei U-förmige Enden senkrecht so positioniert sind, dass die offenen Schenkel(21a,b) sich gegenüber liegen und eine Aussparung(22) bilden, in die ein nicht leitendes Serviertablett(23) eingeführt werden kann, und deren Parameter mithilfe einer Programmiereinheit gemäß den Kundenbedürfnissen gesteuert werden können.

## Revendications

1. Dispositif destiné à réchauffer simultanément plusieurs plats préparés, composé d'une unité de chauffage (1) dotée d'une unité de commande et d'un panneau (3), d'au moins une cavité (4) dotée d'au moins un générateur de microondes (5) et d'un panneau de séparation (17) afin d'empêcher un échange thermique entre une zone chaude (18a) et une zone froide (18b) des plats, et **caractérisé en ce que** le panneau de séparation (17), fixé à la paroi arrière de la cavité (4) se compose de deux feuilles parallèles électro-conductrices (19), reliées par une pièce de liaison (20) à une certaine distance de ses extrémités, créant ainsi un profilé en U avec deux branches (21a, b) et dans lequel au moins deux extrémités en U sont positionnées verticalement, avec les branches ouvertes (21a, b) en opposition mutuelle, de manière à créer une fente (22), permettant ainsi d'insérer un plateau de service non conducteur (23).

2. Dispositif destiné à réchauffer simultanément plusieurs plats préparés selon la revendication 1, et **caractérisé en ce qu**'au moins un générateur de microondes (5) est positionné dans la cavité (4) sur le côté de la zone chaude (18a).

3. Dispositif destiné à réchauffer simultanément plusieurs plats préparés selon la revendication 2, et **caractérisé en ce que** plusieurs générateurs de microondes (5) sont positionnés dans la zone chaude (18a) au niveau des plats.

4. Dispositif destiné à réchauffer simultanément plusieurs plats préparés selon l'une quelconque des revendications précédentes, et **caractérisé en ce que** plusieurs cavités (4) sont fournies, dont chacune comporte au moins un générateur de microondes (5).

5. Dispositif destiné à réchauffer simultanément plusieurs plats préparés selon l'une quelconque des revendications précédentes, et **caractérisé en ce qu**'un panneau de commande (3) permet de définir ou de programmer les paramètres d'au moins un générateur de microondes (5).

6. Dispositif destiné à réchauffer simultanément plusieurs plats préparés selon les revendications 1 à 5, et **caractérisé en ce qu**'un capteur destiné à détecter la présence d'un plat est fourni au niveau d'un plat dans la cavité (4).

7. Dispositif destiné à réchauffer simultanément plusieurs plats préparés selon les revendications 1 à 6, et **caractérisé en ce qu**'une cellule de refroidissement intégrée ou portative est fournie dans la zone froide (18b) de la cavité (4).

8. Dispositif destiné à réchauffer simultanément plusieurs plats préparés selon la revendication 7, et **caractérisé en ce qu**'un fluide cryogénique est utilisé dans le cadre du processus de refroidissement.

9. Dispositif destiné à réchauffer simultanément plusieurs plats préparés selon l'une quelconque des revendications précédentes, et **caractérisé en ce qu**'une unité de transport (7), munie de roues (16) et d'une enveloppe, constituée d'une face avant ouverte (12) afin d'insérer des plateaux de service (23), peut être couplée à une unité de chauffage (1).

10. Dispositif destiné à réchauffer simultanément plusieurs plats préparés, constitué d'une unité de transport (7) dotée d'un panneau de séparation (17) afin de coupler l'unité de transport (7) à une unité de chauffage (1), dotée d'au moins un générateur de microondes (5), et **caractérisé en ce que** le panneau de séparation (17), fixé à la paroi arrière de l'unité de transport (5), se compose de deux feuilles parallèles électro-conductrices (19), reliées par une pièce de liaison (20) à une certaine distance de ses extrémités, créant ainsi un profilé en U avec deux branches (21a, b) et dans lequel au moins deux extrémités en U sont positionnées verticalement, avec les branches ouvertes (21a, b) en opposition mutuelle, de manière à créer une fente (22), permettant ainsi d'insérer un plateau de service non conducteur (23).

11. Dispositif destiné à réchauffer simultanément plusieurs plats préparés selon la revendication 10, et **caractérisé en ce que** l'unité de transport (7) est couplée au sein de la cavité (4) d'une unité de chauffage (1).

12. Dispositif destiné à réchauffer simultanément plusieurs plats préparés selon les revendications 10 à 11, et **caractérisé en ce que** l'unité de transport (7) est dotée d'un mécanisme de couplage afin de relier plusieurs unités de transport (7).

13. Dispositif destiné à réchauffer simultanément plusieurs plats préparés selon les revendications 10 à 12, et **caractérisé en ce qu**'une cellule de refroidissement intégrée ou portative est fournie dans la zone froide (18b) de la cavité (4).

14. Dispositif destiné à réchauffer simultanément plusieurs plats préparés selon la revendication 13, et **caractérisé en ce qu**'un fluide cryogénique est utilisé dans le cadre du processus de refroidissement.

15. Dispositif destiné à réchauffer simultanément plusieurs plats préparés selon les revendications 10 à 11, et **caractérisé en ce que** plusieurs générateurs de microondes (5) sont positionnés dans la zone chaude (18a) au niveau des plats.

16. Procédé destiné à réchauffer simultanément plusieurs plats préparés, dans une cavité (4), en insérant les plats et en chauffant de manière sélective une zone chaude (18a) par le biais d'au moins un générateur de microondes (5) sous l'effet d'un panneau de séparation (17), fixé à la paroi arrière de l'unité de transport (5) comportant deux feuilles parallèles électro-conductrices (19), reliées par une pièce de liaison (20) à une certaine distance de ses extrémités, créant ainsi un profilé en U avec deux branches (21a, b) et dans lequel au moins deux extrémités en U sont positionnées verticalement avec les branches ouvertes (21a, b) en opposition mutuelle, afin de créer une fente (22), permettant ainsi d'insérer un plateau de service non conducteur (23) et dans lequel, selon les besoins du consommateur, des paramètres seront contrôlés à l'aide d'une unité de programmation.
